# EUROPÄISCHE PATENTSCHRIFT

(11) **EP 3 357 333 B1**
(45) Veröffentlichungstag und Bekanntmachung des Hinweises auf die Patenterteilung: **23.06.2021**
(21) Anmeldenummer: 18152944.7
(22) Anmeldetag: 23.01.2018
(51) Int. Cl.: A01M 7/00

(54) **LANDWIRTSCHAFTLICHE VERTEILMASCHINE MIT SELBSTTÄTIGER KONTROLLE DER DÄMPFUNG DES VERTEILERGESTÄNGES**
AGRICULTURAL SPREADER MACHINE WITH AUTOMATIC CONTROL OF THE ATTENUATION OF THE DISTRIBUTOR BOOM
MACHINE D'ÉPANDAGE AGRICOLE À COMMANDE AUTOMATIQUE D'AMORTISSEMENT DE LA R AMPE D'ÉPANDAGE

(30) Priorität: 07.02.2017 DE 102017201918
(43) Veröffentlichungstag der Anmeldung: 08.08.2018
(73) Patentinhaber: Deere & Company, Moline, IL 61265 (US)
(72) Erfinder: Gresch, Valentin, 68163 Mannheim (DE); Kremmer Dr., Martin, 68163 Mannheim (DE); Peeters, Willy, 68163 Mannheim (DE); Driest, Marco, 68163 Mannheim (DE); Ballaire, Frederic, 68163 Mannheim (DE); Alders, Dirk, 68163 Mannheim (DE)
(74) Vertreter: Holst, Sönke

(56) Entgegenhaltungen:
- EP-A1- 2 982 243
- EP-A1- 3 132 682
- EP-A2- 0 176 084
- DE-A1-102014 208 070

## Beschreibung

Die Erfindung betrifft eine landwirtschaftliche Verteilmaschine mit einem Verteilergestänge und einem sich auf dem Boden abstützenden Fahrgestell, wobei das Verteilergestänge gegenüber dem Fahrgestell um eine in Fahrtrichtung verlaufende Schwenkachse bewegbar und/oder höhenverstellbar aufgehängt ist und eine quer zur Fahrtrichtung gemessene Breite aufweist, die ein Vielfaches der Transportbreite der Verteilmaschine ist, und ein das Maß, mit welchem das Verteilergestänge an das Fahrgestell gekoppelt ist, beeinflussendes Dämpfungselement zur Dämpfung der Bewegung des Verteilergestänges vorgesehen ist, welches von einer elektronischen Steuereinrichtung ansteuerbar ist, die mit einem Sensorwert hinsichtlich des aktuellen Fahrzustandes des Fahrgestells beaufschlagbar und betreibbar ist, die Dämpfung des Dämpfungselements basierend auf dem Sensorwert zu verändern.

### Stand der Technik

Feldspritzen dienen dazu, landwirtschaftliche Produkte auf ein Feld auszubringen. Die Feldspritzen können als selbstfahrende oder gezogene Fahrzeuge ausgeführt sein oder lösbar an einem Trägerfahrzeug (Ackerschlepper) angebracht werden. Sie umfassen ein relativ breites Verteilergestänge, das zum Transport einfaltbar ist und an dem Düsen zum Ausbringen des Produkts über die Breite des Verteilergestänges verteilt sind. Bei den Produkten handelt es sich üblicherweise um Flüssigkeiten, die zum Düngen auf dem Feld angebauter Pflanzen oder zur Bekämpfung von Krankheiten oder Schädlingen dienen. In der Regel soll das Produkt in vorbestimmten Mengen je Flächeneinheit ausgetragen werden, die über ein Feld konstant sind oder variieren können. Um die gewünschte Menge tatsächlich ausbringen zu können, ist es wichtig; das ein Düsen zur Produktausbringung halterndes Verteilergestänge in einer definierten Höhe über dem Boden bewegt wird. Ist es zu hoch, wird das Produkt über einen zu großen Bereich verteilt und ist das Verteilergestänge zu niedrig, wird das Produkt nur in einem zu kleinen Bereich abgegeben. Üblicherweise sind Höhe und seitliche Neigung des Verteilergestänges veränderbar und die Neigung des Verteilergestänges wird elektronisch geregelt (s. EP 2 591 657 A1), um es in einer gewünschten Höhe parallel über dem Boden zu führen. Probleme bei der Höhenführung ergeben sich insbesondere dann, wenn der Boden uneben ist oder wenn die Feldspritze um eine Kurve fährt, da sich zur Seite neigende (Roll-) Bewegungen des Fahrzeugs aufgrund der Breite des Verteilergestänges zu recht großen Höhenbewegungen und -schwingungen des Verteilergestänges führen, die sich nicht in allen Fällen hinreichend schnell ausregeln lassen.

Die Aufhängung des Verteilergestänges ist üblicherweise mit Federn und Dämpferelementen ausgestattet. Eine Aufhängung (Feder-Dämpfer-System) mit adäquaten Dämpfungseigenschaften ist wichtig für eine stabile Verteilergestängeführung und somit für die gleichmäßige Ausbringung der Wirkstoffe. Die Auslegung des Aufhängungssystems ist deshalb eine wichtige Aufgabe bei der Entwicklung von Feldspritzen. Im Stand der Technik haben Verteilergestängeaufhängungen typischerweise die Eigenschaften eines Tiefpasses 2. Ordnung. Dabei unterscheiden sich Modelle verschiedener Hersteller oder Baureihen z.B. in der Grenzfrequenz des Aufhängungssystems. Eine tiefe Grenzfrequenz ergibt ein gutes Dämpfungsverhalten hochfrequenter Anregungen, hat jedoch (in vielen Fällen nachteilig) auch ein träges Ansprechverhalten. Ein System mit hoher Grenzfrequenz bietet ein gutes Ansprechverhalten, hat aber eine schlechte Dämpfung bei hochfrequenten Anregungen. Die Hersteller von Feldspritzen optimieren das Ansprechverhalten eines Verteilergestänges basierend auf Erfahrungswerten, Simulationen und Tests. Dabei ist diese Optimierung im Stand der Technik immer ein Kompromiss, um bei verschiedenen Einsatzbedingungen in der Ebene und am Seitenhang in der Summe ein gutes Ansprechverhalten und adäquate Dämpfung von Anregungen zu erhalten.

Im Stand der Technik sind weiterhin Maßnahmen vorgeschlagen worden, um die Höhenführung des Verteilergestänges einer Feldspritze durch eine veränderbare Dämpfung der Rollbewegung des Verteilergestänges zu verbessern:
So beschreibt die DE 10 2011 117 805 A1 eine Feldspritze mit schwenkbar an einem Hubsystem angelenkten Verteilergestängehälften, deren Schwenkbewegung durch Federdämpfer mit einstellbarer, dem jeweiligen Einsatzzweck entsprechender Dämpfung gemindert wird, während die DE 103 14 686 A1 vorschlägt, dass die Dämpfung des Verteilergestänges um die Pendelachse von der Höhe des Verteilergestänges abhängt.

Die DE 20 2013 011 983 U1 beschreibt eine Feldspritze mit einem Verteilergestänge, dessen Pendelbewegung durch einstellbare Dämpfer auf elektro- oder magnetorheologischer Basis gedämpft wird, welche abhängig von erfassten Bewegungen des Verteilergestänges angesteuert werden.

Gemäß der EP 2 526 755 A1 hängt die Dämpfung des Verteilergestänges von Geschwindigkeit, Lenkwinkel und Füllstand des Tanks der Feldspritze ab. Die EP 2 526 756 A1 schlägt vor, die besagte Dämpfung abhängig von der Topographie des befahrenen Geländes, die anhand von Positionsdaten ermittelt wird, zu gestalten.

Die EP 2 559 332 A1 schlägt vor, die Dämpfung von der Drehrate um die Hochachse abhängig zu gestalten, um den ggf. vorliegenden Fliehkräften entgegen zu wirken. Fährt die Feldspritze um eine Kurve, wirken Zentrifugalkräfte auf den Schwerpunkt des Verteilergestänges, die ohne Gegenmaßnahme aufgrund der federnden Aufhängung des Verteilergestänges am Fahrgestell der Feldspritze zu einer Auslenkung des Gestänges führen würde. Als diese Fliehkräfte kompensierende Gegenmaßnahme wird die Dämpfung der Aufhängung des Verteilergestänges verändert oder die Neigung des Gestänges durch einen Aktor verstellt.

In der EP 2 829 177 A1 wird die Dämpfung des Verteilergestänges durch Hydraulikzylinder erzeugt, die auch zur Verstellung des Winkels des Verteilergestänges um die Hochachse dienen. Die Dämpfung hängt von der Beschleunigung des Fahrzeugs und der Geländeneigung ab.

Weiterhin wurde vorgeschlagen, das Verteilergestänge durch Aktoren gegenüber dem Fahrgestell zu bewegen, um vorausschauend oder reaktiv auf zu erwartende oder erfasste Bewegungen des Fahrgestells zu reagieren und die Bewegung des Verteilergestänges zu minimieren (DE 10 2014 208 070 A1, EP 2 982 243A1 und die nachveröffentlichte EP 3 132 682 A1).

### Aufgabe

Es ist demnach an sich bekannt, die Dämpfung des Verteilergestänges gegenüber dem Fahrgestell der Feldspritze zur Minderung der seitlichen Rollbewegungen variabel zu gestalten, wozu als Eingangsgröße zur Vorgabe der Dämpfung die Höhe der Pendelachse (DE 103 14 686 A1), der Einsatzzweck (DE 10 2011 117 805 A1), Geschwindigkeit, Lenkwinkel und Füllstand des Tanks der Feldspritze (EP 2 526 755 A1), die Drehrate der Feldspritze um die Hochachse (EP 2 559 332 A1) oder die Topographie des befahrenen Geländes (2 526 756 A1) verwendet werden. Die erwähnten Eingangsgrößen können nur sehr grob darüber informieren, welche Dämpfung wirklich benötigt wird, um das Verteilergestänge wirksam abzudämpfen und führen daher in vielen Fällen zu einem nicht optimalem Bewegungsverhalten des Verteilergestänges. Bei einer aktiven Ansteuerung von Aktoren im Sinne einer Minderung der Bewegung des Verteilergestänges (DE 10 2014 208 070 A1, EP 2 982 243A1, EP 3 132 682 A1) wird die Position des Verteilergestänges verändert, eine Veränderung der Dämpfung des Systems ist aber nicht vorgesehen, was nicht in allen Fällen zur Tilgung der Bewegung führt.

Die vorliegende Erfindung hat sich zur Aufgabe gemacht, die erwähnten Nachteile zumindest teilweise zu vermeiden.

### Lösung

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Mit anderen Worten wird anhand des aktuellen Fahrzustandes der Verteilmaschine und veränderbarer physischer Größen der Verteilmaschine erkannt, wie sich das Fahrgestell bzw. die Verteilmaschine in näherer Zukunft bewegen wird. So kann beispielsweise anhand des Reifendrucks, des Abstandes der Räder (Spurweite) und der Drehrate des Fahrgestells um die Hochachse erkannt werden, dass und in welchem Maße sich die Verteilmaschine zur Seite neigen wird, wenn eine Kurve befahren wird. Diese seitliche Neigung dient zur Einstellung der Dämpfung des Dämpfungselements. Eine größere Dämpfung kann insbesondere eingestellt werden, wenn eine Nachführung des Verteilergestänges entlang der Bewegung (Neigung) des Fahrgestells wünschenswert ist. Mit größerer Dämpfung wird das Verteilergestänge stärker an das Fahrgestell gekoppelt. Insbesondere bei Fahrten über Schlaglöcher soll das Verteilergestänge jedoch nur schwach mit dem Fahrgestell gekoppelt sein, um Fahrgestellbewegungen möglichst nicht auf das Verteilergestänge zu übertragen. Für das genannte Beispiel einer Kurvenfahrt ist es somit in der Regel vorteilhaft, wenn die Steuereinrichtung die Dämpfung erhöht, da das Verteilergestänge sich ansonsten durch Fliehkräfte stark neigt. Eine Kopplung an die Neigung des Fahrzeugs (durch erhöhte Dämpfung des Dämpfungselements) ist somit üblicherweise weniger nachteilig als die durch Fliehkräfte induzierte Bewegung eines relativ schwach gedämpften Verteilergestänges. Bei einer unebenen Fahrstrecke wird die Steuereinrichtung hingegen das Verteilergestänge nur schwach dämpfen. Auf diese Weise wird eine verbesserte Anpassung der Dämpfung an die jeweilige Betriebssituation der Verteilmaschine erreicht.

Die elektronische Steuereinrichtung kann programmiert sein, bei der Erzeugung des Steuersignals die Auswirkung der aktuellen, verstellbaren Geometrie des Verteilergestänges auf den zu erwartenden Fahrzustand der Verteilmaschine zu berücksichtigen. So lassen sich bei bestimmten Feldspritzen die beiden Ausleger um bis zu 10° nach oben verkippen. Dies entspricht bei einem üblichen, 36 m breiten Verteilergestänge einer vertikalen Anhebung der Verteilergestängespitze von beinahe 3 m. Es ist ersichtlich, dass sich die auf diese Weise änderbare Geometrie des Verteilergestänges auch auf die Fahreigenschaften des Verteilergestänges auswirken wird. Zusätzlich sei auf andere Verstellmöglichkeiten von Verteilergestängen verwiesen. EP 2 186 405 A1 beschreibt ein Verteilergestänge mit einer Vielzahl an Segmenten, welche der Bodenkontur angepasst werden können. Die Geometrie eines derartigen Verteilergestänges kann ebenfalls in der beschriebenen Weise Berücksichtigung finden.

Der Sensorwert hinsichtlich des aktuellen Fahrzustandes der Verteilmaschine und/oder der zu erwartende Fahrzustand der Verteilmaschine kann die seitliche Neigung der Verteilmaschine und/oder die Neigung der Verteilmaschine in Vorwärtsrichtung und/oder die Beschleunigung der Verteilmaschine und/oder die Geschwindigkeit und/oder Beschleunigung des Fahrgestells bzw. der Verteilmaschine in Vorwärtsrichtung und/oder vertikaler Richtung (zwecks Ableitung von Informationen über kurzzeitige vertikale Fahrzeuganregungen verursacht durch Schlaglöcher, Steine, Schwellen) und/oder die Drehrate der Verteilmaschine um die Hochachse und/oder Längsachse (Rollen) und/oder die Querachse (Nicken) oder zeitliche Änderung der besagten Orientierung betreffen.

Der Sensorwert hinsichtlich des aktuellen Fahrzustandes der Verteilmaschine kann aus Messwerten einer Fahrzeugfederung ableitbar sein.

Die physischen Größen der Verteilmaschine können dessen Spurweite und/oder die die (beispielsweise mittels eines in die Reifen integrierten, die Radaufstandskraft der Verteilmaschine messenden Sensors oder eines zwischen dem Fahrgestell der Verteilmaschine und einer Radaufhängung angebrachten Sensors erfassbaren) Gesamtmasse der Verteilmaschine und/oder den Füllstand eines Tanks betreffen, der direkt (mittels eines Sensors) oder indirekt (anhand der eingefüllten und entnommenen Mengen oder anhand der Reaktion des Fahrgestells auf eine Lenkbewegung oder Beschleunigung) erfassbar ist.

Die elektronische Steuereinrichtung kann programmiert sein, bei der Berechnung des zu erwartenden Fahrzustands der Verteilmaschine zusätzlich Daten hinsichtlich der Topographie des jeweils zu befahrenden Geländes zu berücksichtigen.

Die elektronische Steuereinrichtung kann programmiert sein, den zu erwartenden Fahrzustand anhand eines mathematischen, das physikalische Verhalten der Verteilmaschine und/oder des Verteilergestänges repräsentierenden Modells zu berechnen.

Das Dämpfungselement kann ein hydraulischer Zylinder sein, der vorzugsweise zugleich von der Steuereinrichtung als Aktor zur Verstellung des Verteilergestänges um die Schwenkachse und/oder Höhenverstellung angesteuert wird, um das Verteilergestänge parallel zum darunter befindlichen Boden bzw. Pflanzenbestand in einer gewünschten Höhe über dem darunter befindlichen Boden bzw. Pflanzenbestand auszurichten.

Der hydraulische Zylinder kann zwecks Erzielung der verstellbaren Dämpfungseigenschaft des hydraulischen Zylinders über ein durch die Steuereinrichtung kontrolliertes Ventil mit veränderlicher Größe der Durchlassöffnung mit einem pneumatischen Druckspeicher verbunden werden.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer als selbstfahrende Feldspritze ausgeführten Verteilmaschine,
- Fig. 2: eine rückwärtige Ansicht des ausgefahrenen Verteilergestänges der Verteilmaschine der Figur 1,
- Fig. 3: eine vergrößerte, rückwärtige Ansicht des mittleren Teils des Verteilergestänges der Figur 2,
- Fig. 4: ein Schema eines Sensors zur Erfassung des aktuellen Fahrzustandes des Fahrgestells der Verteilmaschine,
- Fig. 5: ein Schema der Hydraulik zur Höhenführung des Verteilergestänges der Verteilmaschine,
- Fig. 6: ein Schema der Hydraulik zur Neigungskontrolle der Verteilmaschine, und
- Fig. 7: ein Flussdiagramm, nach dem die Steuereinrichtung der Verteilmaschine arbeitet.

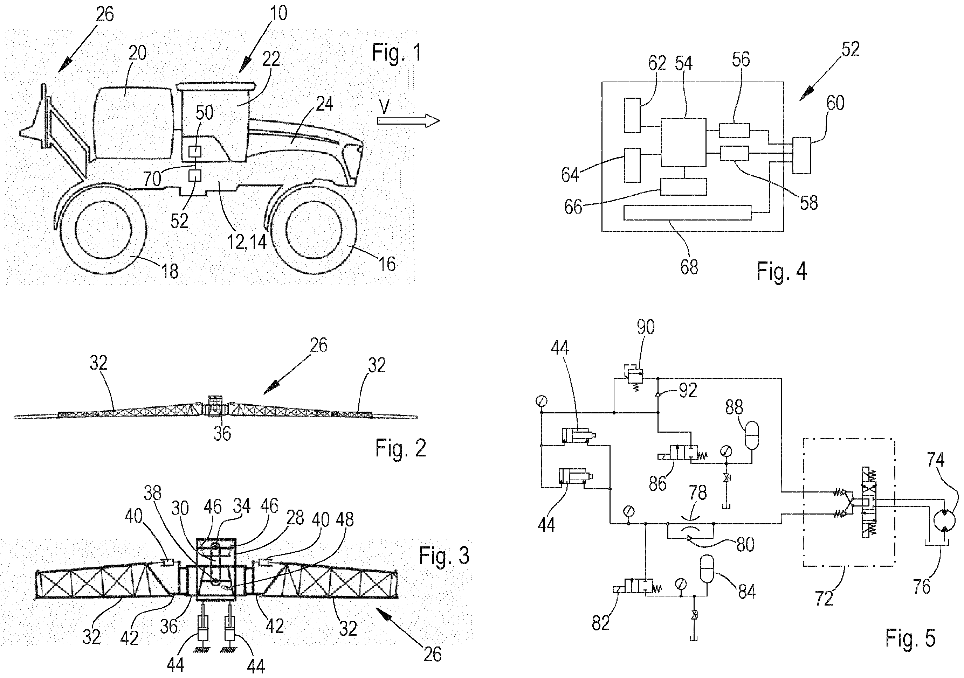

Die Figur 1 zeigt eine Verteilmaschine 10 zur Ausbringung von flüssigen Wirkstoffen in Form eines selbstfahrenden Fahrzeugs, das alternativ zur selbstfahrenden Ausführungsform als an einen Ackerschlepper anbaubares oder gezogenes Gerät ausgeführt sein könnte. Die Verteilmaschine 10 umfasst ein Fahrgestell 12 mit einem Rahmen 14, der sich auf vorderen Rädern 16 und hinteren Rädern 18 auf dem Erdboden abstützt. Die Räder 16, 18 können lenkbar und antreibbar sein. Auf dem Rahmen 14 stützen sich ein Tank 20 für die Wirkstoffe und eine Kabine 22 ab, vor der sich ein Motorraum 24 befindet. Die Fahrtrichtung V im Betrieb ist in der Figur 1 nach rechts gerichtet. Rückwärtig ist am Rahmen 14 der Verteilmaschine 10 ein neigungs- und höhenverstellbares Verteilergestänge 26 angebracht, das in den Figuren 2 und 3 in einer rückwärtigen Ansicht dargestellt ist.

Am Rahmen 14 ist ein durch gekoppelte Hydraulikzylinder 44 in der Höhe verstellbarer Verstellrahmen 28 angebracht. An diesem Verstellrahmen 28 ist ein Pendel 30 um eine sich in Vorwärtsrichtung V erstreckende Achse 34 drehbar gelagert. An dem Pendel 30 ist ein mittleres Segment 36 des Verteilergestänges 26 um eine sich in Vorwärtsrichtung V erstreckende Achse 38 drehbar gelagert. Zwei Ausleger 32 des Verteilergestänges 26 sind links und rechts an dem mittleren Segment 36 angebracht und über Hydraulikzylinder 40 gegenüber dem mittleren Segment 36 um sich in Vorwärtsrichtung V erstreckende Achsen 42 verstellbar. Das mittlere Segment 36 und die beiden Ausleger 32 bilden zusammen das Verteilergestänge 26, das mit Düsen zur Ausbringung der Wirkstoffe aus dem Tank 20 versehen ist.

Das Pendel 30 ist gegenüber dem Verstellrahmen 28 mittels zweier gekoppelter Hydraulikzylinder 46 um die sich in Vorwärtsrichtung V erstreckende Achse 34 drehbar. Des Weiteren ist das mittlere Segment 36 des Verteilergestänges 26 gegenüber dem Pendel 30 ebenfalls mittels eines Hydraulikzylinders 48 um die sich in Vorwärtsrichtung V erstreckende Achse 38 drehbar.

Eine Steuereinrichtung 50 ist über geeignete Ventile mit den Hydraulikzylindern 40, 44, 46, 48 verbunden und kann zur Führung und Regelung des Verteilergestänges folgende Verstellungen vornehmen:
Höhenführung: Die Höhe des mittleren Segments 36 des Verteilergestänges 26 wird verstellt, indem der Rahmen 28 gegenüber dem Rahmen 14 über eine Parallelkinematik mittels der hydraulisch betätigten Zylinder 44 nach oben und unten verstellt wird.
Neigung des Pendels 30: Das Pendel 30 wird über die zwei hydraulisch betätigbaren Zylinder 46 gegenüber dem Verstellrahmen rotatorisch verstellt. Die Drehachse 34 verläuft dabei parallel zur Fahrzeuglängsachse und Vorwärtsrichtung V.
Versatz des Verteilergestänges 26 gegenüber dem Pendel 30: Das mittlere Segment 36 des Verteilergestänges 26 wird gegenüber dem Pendel 30 rotatorisch verstellt. Die Drehachse 38 verläuft dabei parallel zur Fahrzeuglängsachse und Vorwärtsrichtung V.
Anpassung der Verteilergestänge-Geometrie: Die beiden Ausleger 32 des Verteilergestänges 26 werden mittels der Hydraulikzylinder 40 gegenüber dem mittleren Segment 36 des Verteilergestänges 26 verkippt. Die Drehachse 42 verläuft dabei parallel zur Fahrzeuglängsachse und Vorwärtsrichtung V.

Bisher nicht erwähnt wurde die nicht gezeigte Aktorik, welche zum Verfahren des Verteilergestänges 26 zwischen gezeigter Arbeits- und eingefalteter Transportstellung benötigt wird. Zum Verfahren zwischen Arbeits- und Transportposition kann teilweise auf die bereits erläuterte Aktorik zurückgegriffen werden. So werden beispielsweise die Hydraulikzylinder 44 dazu verwendet, das Verteilergestänge 26, nachdem es eingeklappt wurde, in die Transportarretierung abzusenken.

Mittels einer am Rahmen 14 angebrachten Messeinheit 52, die in der Figur 4 gezeigt ist und in an sich bekannter Weise einen Prozessor 54, eine Busschnittstelle 56, eine digitale Ein- und Ausgabeschnittstelle 58, eine über eine Leitung 70 mit der Steuereinrichtung 50 verbundene Steckverbindung 60, einen als mikroelektromechanisches Element (MEMS) ausgeführten Beschleunigungssensor 62, ein als mikroelektromechanisches Element (MEMS) ausgeführtes Gyroskop 64 und eine Spannungsversorgung 68 umfasst, werden Beschleunigungen (in drei Richtungen) und Drehraten (ebenfalls in drei Richtungen) des Fahrgestells 12 ermittelt. Diese Signale werden der Steuereinrichtung 50 zugeführt und von dieser verarbeitet, um über eine Bewertung der Fahrzeugdynamik den zu erwartenden Fahrzustand der Verteilmaschine 10 zu erkennen. Komplementär und/oder alternativ können zur Berechnung des zu erwartenden Fahrzustands der Verteilmaschine 10 Messungen des Federwegs (beispielweise über Seilzugpotentiometer oder mittels über Gestänge betätigter Drehpotentiometer oder direkter Entfernungsmessverfahren, z.B. auf Ultraschall basierend) und/oder Druckmessungen im Federsystem der Räder 16, 18 herangezogen werden.

Die Steuereinrichtung 50 kann anhand der Signale von der Messeinheit 52 unterschiedliche Bewegungsprofile des Fahrgestells 12 erkennen, zu denen beispielsweise Hangfahrten, Fahrten in hügeligem Gelände, Übergänge zwischen Ebene und Hang, Anregungen durch Schlaglöcher, Steine oder Feldunebenheiten und Kurvenfahrten gehören. Anhand von Betriebsdaten von Elementen der Verteilmaschine kann der Kurventyp bei einem Wendemanöver erkannt werden (vgl. DE 10 2014 202 181 A1).

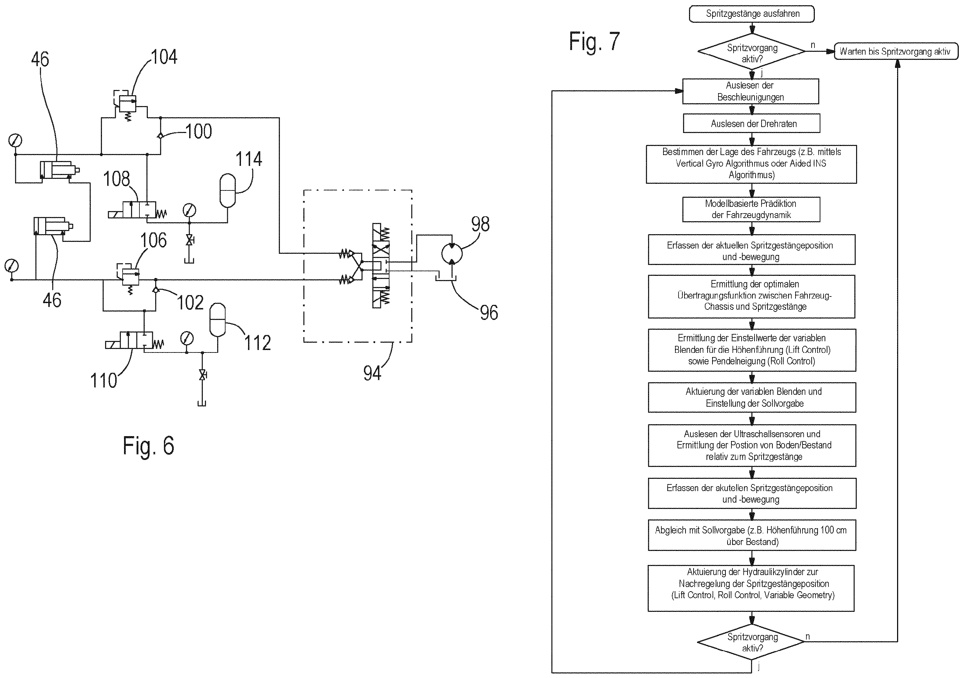

Die Steuereinrichtung 50 ermöglicht eine selbsttätige Anpassung der Dämpfungseigenschaft der Verteilergestängeaufhängung an die jeweilige Betriebssituation, indem das beschriebene, zur Verstellung des Verteilergestänges 26 dienende Hydrauliksystem mit den Hydraulikzylindern 44 und 46 als wesentliches, dämpfendes Element verwendet wird. Hierzu wird auf die Figuren 5 und 6 verwiesen, von denen die Figur 5 die Verschaltung der Hydraulikzylinder 44 zur Höhensteuerung und die Figur 6 die Verschaltung der Hydraulikzylinder 46 zur Verstellung der Neigung des Pendels 30 zeigt.

Bei der Höhensteuerung nach Figur 5 ermöglicht ein Schaltventil 72, die Hydraulikzylinder 44 zum Anheben oder Absenken mit einer Pumpe 74 bzw. einem Vorratsbehälter 76 zu verbinden. Zum Anheben des Rahmens 28 werden die Kolbenkammern der Hydraulikzylinder 44 über ein Rückschlagventil 92 befüllt und analog werden die Kolbenstangenkammern der Hydraulikzylinder 44 zum Absenken des Rahmens 28 über ein Rückschlagventil 80 befüllt. Zu dem Rückschlagventil 92 ist ein druckgesteuertes Ventil 90 antiparallel geschaltet und zu dem Rückschlagventil 80 ist eine Blende 78 parallel geschaltet. Weitere Schaltventile 82, 86 verbinden die Kolbenkammern bzw. die Kolbenstangenkammern der parallel geschalteten Hydraulikzylinder 44 mit Druckspeichern.

Bei der Neigungssteuerung nach Figur 6 ermöglicht ein Schaltventil 94, jeweils eine Kolbenkammer der Hydraulikzylinder 46, deren Kolbenstangenkammern direkt untereinander durch eine Leitung verbunden sind, Verstellen der Neigung des Pendels 30 mit einer Pumpe 98 bzw. einem Vorratsbehälter 96 zu verbinden. Zum Schwenken des Pendels 30 werden die Kolbenkammern der Hydraulikzylinder 46 über Rückschlagventile 100 oder 102 befüllt. Zu dem Rückschlagventilen 100, 102 sind jeweils druckgesteuerte Ventile 104, 106 antiparallel geschaltet. Weitere Schaltventile 108, 110 verbinden die Kolbenstangenkammern der Hydraulikzylinder 46 mit Druckspeichern.

Demnach kann die Steuereinrichtung 50 einerseits die Höhe des Rahmens 28 und die Neigung des Pendels 30 in an sich bekannter Weise verstellen, basierend insbesondere auf Bedienereingaben über eine nicht gezeigte Bedienerschnittstelle oder auf am Verteilergestänge 26 angebrachten Sensoren (nicht gezeigt) zur Erfassung von dessen Höhe über dem Erdboden, andererseits durch die Ventile 82, 86, 108 und 110 die Druckspeicher 84, 88, 112, 114 mit den Hydraulikzylindern 44, 46 verbinden, um diese zu bedämpfen. Die Ventile 82, 86, 108 und 110 können als Proportionalventile ausgeführt oder durch Pulsweitenmodulation steuerbar sein, um die Dämpfung stufenlos verstellen zu können. Die aktuellen Öffnungsquerschnitte der Ventile 82, 86, 108 und 110 sowie deren Geometrie definieren den Strömungswiderstand und somit die Dämpfungscharakteristik des Hydrauliksystems. Ist die Geometrie der Ventile 82, 86, 108 und 110 als Drossel (d.h. die Länge der Verjüngung ist im Vergleich zum Querschnitt groß) ausgeführt, steigt der Volumenstrom gemäß dem Durchflussgesetz linear mit dem Druckunterschied. Ist die Geometrie der Ventile 82, 86, 108 und 110 als Blende (Länge der Verjüngung im Vergleich zum Querschnitt klein) ausgeführt, verhalten sich Druckdifferenz und Volumenstrom nichtlinear. Über die Viskosität des Hydrauliköls ist die Dämpfungsrate auch von der Hydrauliköltemperatur abhängig. Ein Temperatursensor im Hydraulikkreislauf kann verwendet werden, um diese Abhängigkeit zu kompensieren. Die Druckspeicher 84, 88, 112, 114 agieren über die mittels Gasdruck erzeugte Vorspannung als Federelemente. Der Gasdruck und somit die Federkonstante kann üblicherweise während des Betriebs der Maschine nicht aktiv verstellt oder eingestellt werden.

Auch die Blende 78 der Figur 5 bewirkt eine gewisse Dämpfung der Hydraulikzylinder 44 und könnte einen veränderbaren Blendenquerschnitt aufweisen, um durch die Steuereinheit die Dämpfungseigenschaft zu verstellen.

Anhand der beschriebenen Erkennung des Bewegungsprofils kann nun das Hydrauliksystem im Sinne eines semi-aktiven Dämpfungssystems auf das Einsatzprofil der Verteilmaschine 10 angepasst werden. Es erfolgt demnach eine adaptive Regelung der Dämpfung der Hydraulikzylinder durch die Steuereinrichtung basierend auf Signalen von der Messeinheit 52 anhand der momentanen Neigung des Fahrgestells 12, der momentanen Beschleunigung des Fahrgestells 12, der momentanen Drehrate des Fahrgestells 12, einer prädiktierten Neigung des Fahrgestells 12, einer prädiktierten Beschleunigung des Fahrgestells 12 und einer prädiktierte Drehrate des Fahrgestells 12.

Die Prädiktion der Neigung, Beschleunigung und Drehrate des Fahrgestells 12 wird durch die Steuereinrichtung 50 basierend auf variablen physischen Größen der Verteilmaschine 10 durchgeführt. Bei diesen Größen kann es sich um die Einstellung der variierbaren Spurweite der Verteilmaschine 10 (d.h. dem seitlichen Abstand der Räder 16 und 18), den Füllstand des Tanks 20, ggf. dem Füllstand von weiteren Tanks (nicht gezeigt) und/oder Daten hinsichtlich der aktuellen Geometrie des Verteilergestänges 26 (z.B. bei Verkippung eines Auslegers 32 gegenüber dem mittleren Segment 36 und dem anderen Ausleger 32 mittels eines Hydraulikzylinders 40) handeln. Hierzu kann auf an sich bekannte Vorgehensweisen zurückgegriffen werden, die anhand der gemessenen Werte und der erwähnten, variablen physischen Größen berechnen, wie die erwähnten, prognostizierten Werte aussehen werden. Hierbei kann für das Verhalten des Verteilfahrzeugs 10 ein beliebiges mathematisches Modell bzw. ein daraus abgeleitetes Gleichungssystem verwendet werden, dessen Parameter an die aktuelle Situation der Verteilmaschine 10 angepasst werden, wie es beispielsweise in DE 10 2014 208 070 A1 beschrieben wird. Anhand der vorhergesagten Neigung, Beschleunigung und Drehrate des Fahrgestells 12 bzw. der Verteilmaschine 10 wird die Dämpfung der Hydraulikzylinder 44, 46 durch die Steuereinrichtung 50 in der oben anhand der Figuren 5 und 6 beschriebenen Weise vorgegeben. Somit wird erreicht, dass die Dämpfung und somit die Übertragungsfunktion, mit welcher die Hydraulik eventuelle Schwingungen der Verteilmaschine 10 auf das Verteilergestänge 26 überträgt, in geeigneter Weise beeinflusst wird. So wird die von der Steuereinheit 50 angesteuerte Übertragungsfunktion an einem Seitenhang eine gute Übertragung der Bewegung des Fahrgestells 12 der Verteilmaschine 10 auf das Verteilergestänge 26 ermöglichen (große Dämpfung), während sie bei Schlaglöchern die Bewegungen kaum oder nicht übertragen wird (kleine Dämpfung).

Die beschriebene Vorgehensweise ist in dem Flussdiagramm der Figur 7 konkretisiert.

Die adaptive Regelung der Dämpfung kann zusätzlich basierend auf einer (beispielsweise mittels eines Positionsbestimmungssystem, z.B. GPS) ermittelten Position der Verteilmaschine 10 und abgespeicherten Daten hinsichtlich des Höhenprofils des Feldes und/oder den pneumatischen Druck einer Fahrzeug-Federung der Verteilmaschine 10 erfolgen.

## Patentansprüche

1. Landwirtschaftliche Verteilmaschine (10) mit einem Verteilergestänge (26) und einem sich auf dem Boden abstützenden Fahrgestell (12), wobei das Verteilergestänge (26) gegenüber dem Fahrgestell (12) um eine in Fahrtrichtung verlaufende Schwenkachse (34) bewegbar und/oder höhenverstellbar aufgehängt ist und eine quer zur Fahrtrichtung gemessene Breite aufweist, die ein Vielfaches der Transportbreite der Verteilmaschine (10) ist, und ein das Maß, mit welchem das Verteilergestänge (26) an das Fahrgestell (12) gekoppelt ist, beeinflussendes Dämpfungselement zur Dämpfung der Bewegung des Verteilergestänges (26) vorgesehen ist, welches von einer elektronischen Steuereinrichtung (50) ansteuerbar ist, die mit einem Sensorwert hinsichtlich des aktuellen Fahrzustandes des Fahrgestells (12) beaufschlagbar und betreibbar ist, die Dämpfung des Dämpfungselements basierend auf dem Sensorwert zu verändern, wobei die elektronische Steuereinrichtung (50) programmiert ist, anhand des Sensorwerts und veränderbarer physischer Größen der Verteilmaschine (10) vorausschauend einen zu erwartenden Fahrzustand der Verteilmaschine (10) zu berechnen und anhand des zu erwartenden Fahrzustands der Verteilmaschine (10) ein Steuersignal an das Dämpfungselement abzugeben, um dessen Dämpfung im Sinne einer Minimierung unerwünschter Bewegungen des Verteilergestänges (26) zu verstellen.

2. Landwirtschaftliche Verteilmaschine (10) nach Anspruch 1, wobei die elektronische Steuereinrichtung (50) programmiert ist, bei der Erzeugung des Steuersignals die Auswirkung der aktuellen, verstellbaren Geometrie des Verteilergestänges (26) auf den zu erwartenden Fahrzustand der Verteilmaschine (10) zu berücksichtigen.

3. Landwirtschaftliche Verteilmaschine (10) nach Anspruch 1 oder 2, wobei der Sensorwert hinsichtlich des aktuellen Fahrzustandes der Verteilmaschine (10) und/oder der zu erwartende Fahrzustand der Verteilmaschine (10) die seitliche Neigung des Fahrgestells (12) und/oder die Neigung des Fahrgestells (12) in Vorwärtsrichtung und/oder in vertikaler Richtung und/oder die Geschwindigkeit und/oder Beschleunigung des Fahrgestells (12) in mindestens einer Raumrichtung und/oder die eine Orientierung des Fahrgestells (12) um die Hochachse und/oder Längsachse und/oder Querachse oder zeitliche Änderung der besagten Orientierung betrifft.

4. Landwirtschaftliche Verteilmaschine (10) nach einem der Ansprüche 1 bis 3, wobei der Sensorwert hinsichtlich des aktuellen Fahrzustandes der Verteilmaschine (10) aus Messwerten einer

5. Landwirtschaftliche Verteilmaschine (10) nach einem der Ansprüche 1 bis 4, wobei die physischen Größen der Verteilmaschine (10) deren Spurweite und/oder die Gesamtmasse der Verteilmaschine (10) und/oder den Füllstand eines Tanks (20) betreffen, der direkt oder indirekt erfassbar ist.

6. Landwirtschaftliche Verteilmaschine (10) nach einem der Ansprüche 1 bis 5, wobei die elektronische Steuereinrichtung (50) programmiert ist, bei der Berechnung des zu erwartenden Fahrzustands der Verteilmaschine (10) zusätzlich Daten hinsichtlich der Topographie des jeweils zu befahrenden Geländes zu berücksichtigen.

7. Landwirtschaftliche Verteilmaschine (10) nach einem der Ansprüche 1 bis 6, wobei die elektronische Steuereinrichtung (50) programmiert ist, den zu erwartenden Fahrzustand anhand eines mathematischen, das physikalische Verhalten der Verteilmaschine (10) und/oder des Verteilergestänges (26) repräsentierenden Modells zu berechnen.

8. Landwirtschaftliche Verteilmaschine (10) nach einem der Ansprüche 1 bis 7, wobei das Dämpfungselement ein hydraulischer Zylinder (44, 46) ist.

9. Landwirtschaftliche Verteilmaschine (10) nach Anspruch 8, wobei der hydraulische Zylinder (44, 46) zugleich von der Steuereinrichtung (50) als Aktor zur Verstellung des Verteilergestänges (26) ansteuerbar ist.

10. Landwirtschaftliche Verteilmaschine (10) nach Anspruch 8 oder 9, wobei der hydraulische Zylinder (44, 46) zur Verstellung der Dämpfungseigenschaft des hydraulischen Zylinders (44, 46) über ein Ventil (82, 86, 108, 110), dessen Durchlassöffnung durch die Steuereinrichtung (50) veränderbar ist, mit einem pneumatischen Druckspeicher (84, 88, 112, 114) verbunden ist.

## Claims

1. Agricultural spreader machine (10) with a distributor boom (26) and a chassis (12) supported on the ground, wherein the distributor boom (26) is suspended so as to be movable and/or height-adjustable in relation to the chassis (12) about a pivot axis (34) running in the direction of travel, and has a width which is measured transversely with respect to the direction of travel and is a multiple of the transport width of the spreader machine (10), and a damping element for damping the movement of the distributor boom (26) is provided which influences the extent by which the distributor boom (26) is coupled to the chassis (12) and which can be activated by an electronic control device (50) to which a sensor value regarding the current driving state of the chassis (12) can be applied and which can be operated to change the damping of the damping element on the basis of the sensor value, wherein the electronic control device (50) is programmed to proactively calculate an anticipated driving state of the spreader machine (10) on the basis of the sensor value and variable physical variables of the spreader machine (10) and, with reference to the anticipated driving state of the spreader machine (10), to output a control signal to the damping element in order to adjust the damping thereof with the effect of minimizing undesired movements of the distributor boom (26) .

2. Agricultural spreader machine (10) according to Claim 1, wherein the electronic control device (50) is programmed to take into account the effect of the current adjustable geometry of the distributor boom (26) on the anticipated driving state of the spreader machine (10) when generating the control signal.

3. Agricultural spreader machine (10) according to Claim 1 or 2, wherein the sensor value with regard to the current driving state of the spreader machine (10) and/or the anticipated driving state of the spreader machine (10) relates to the lateral inclination of the chassis (12) and/or the inclination of the chassis (12) in a forward direction and/or in a vertical direction, and/or the speed and/or acceleration of the chassis (12) in at least one spatial direction, and/or the one orientation of the chassis (12) about the vertical axis and/or the longitudinal axis and/or the transverse axis, or a change of said orientation over time.

4. Agricultural spreader machine (10) according to one of Claims 1 to 3, wherein the sensor value regarding the current driving state of the spreader machine (10) can be derived from measurement values of a vehicle suspension.

5. Agricultural spreader machine (10) according to one of Claims 1 to 4, wherein the physical variables of the spreader machine (10) relate to the track width thereof and/or to the overall dimensions of the spreader machine (10), and/or to the filling level of a tank (20), which can be detected directly or indirectly.

6. Agricultural spreader machine (10) according to one of Claims 1 to 5, wherein the electronic control device (50) is programmed to additionally take into account data regarding the topography of the terrain to be traversed in each case when calculating the anticipated driving state of the spreader machine (10).

7. Agricultural spreader machine (10) according to one of Claims 1 to 6, wherein the electronic control device (50) is programmed to calculate the anticipated driving state on the basis of a mathematical model representing the physical behaviour of the spreader machine (10) and/or of the distributor boom (26).

8. Agricultural spreader machine (10) according to one of Claims 1 to 7, wherein the damping element is a hydraulic cylinder (44, 46).

9. Agricultural spreader machine (10) according to Claim 8, wherein the hydraulic cylinder (44, 46) can be activated simultaneously by the control device (50) as an actuator for adjusting the distributor boom (26).

10. Agricultural spreader machine (10) according to Claim 8 or 9, wherein, in order to adjust the damping property of the hydraulic cylinder (44, 46), the hydraulic cylinder (44, 46) is connected to a pneumatic pressure store (84, 88, 112, 114) via a valve (82, 86, 108, 110), the through opening of which can be changed by the control device (50).

## Revendications

1. Machine d'épandage agricole (10) comportant une rampe d'épandage (26) et un châssis (12) s'appuyant sur le sol, la rampe d'épandage (26) étant suspendue par rapport au châssis (12) de manière mobile et/ou réglable en hauteur autour d'un axe de pivotement (34) s'étendant dans la direction de conduite et présentant une largeur, mesurée transversalement à la direction de conduite, qui est un multiple de la largeur de transport de la machine d'épandage (10), et un élément d'amortissement influençant la mesure dans laquelle la rampe d'épandage (26) est accouplée au châssis (12) et servant à l'amortissement du mouvement de la rampe d'épandage (26) étant prévu, lequel élément d'amortissement peut être commandé par un dispositif de commande électronique (50) qui est soumis à une valeur de capteur concernant l'état de déplacement actuel du châssis (12) et peut fonctionner de manière à modifier l'amortissement de l'élément d'amortissement sur la base de la valeur de capteur, le dispositif de commande électronique (50) étant programmé pour, sur la base de la valeur de capteur et de grandeurs physiques modifiables de la machine d'épandage (10), calculer de manière prévisionnelle un état de déplacement attendu de la machine d'épandage (10) et, sur la base de l'état de déplacement attendu de la machine d'épandage (10), pour fournir un signal de commande à l'élément d'amortissement, afin de régler son amortissement au sens d'une réduction au minimum de mouvements indésirables de la rampe d'épandage (26).

2. Machine d'épandage agricole (10) selon la revendication 1, le dispositif de commande électronique (50) étant programmé pour, lors de la génération du signal de commande, prendre en compte l'effet de la géométrie actuelle réglable de la rampe d'épandage (26) sur l'état de déplacement attendu de la machine d'épandage (10).

3. Machine d'épandage agricole (10) selon la revendication 1 ou 2, la valeur de capteur concernant l'état de déplacement actuel de la machine d'épandage (10) et/ou l'état de déplacement attendu de la machine d'épandage (10) ayant trait à l'inclinaison latérale du châssis (12) et/ou l'inclinaison du châssis (12) dans la direction vers l'avant et/ou dans la direction verticale et/ou la vitesse et/ou l'accélération du châssis (12) dans au moins une direction spatiale et/ou une orientation du châssis (12) autour de l'axe vertical et/ou l'axe longitudinal et/ou l'axe transversal ou la variation dans le temps de ladite orientation.

4. Machine d'épandage agricole (10) selon l'une des revendications 1 à 3, la valeur de capteur concernant l'état de déplacement actuel de la machine d'épandage (10) pouvant être déduite de valeurs de mesure d'une suspension de véhicule.

5. Machine d'épandage agricole (10) selon l'une des revendications 1 à 4, les grandeurs physiques de la machine d'épandage (10) ayant trait à sa voie et/ou à la masse totale de la machine d'épandage (10) et/ou au niveau de remplissage d'un réservoir (20), qui peut être détecté directement ou indirectement.

6. Machine d'épandage agricole (10) selon l'une des revendications 1 à 5, le dispositif de commande électronique (50) étant programmé pour, lors du calcul de l'état de déplacement attendu de la machine d'épandage (10), prendre en compte en outre des données concernant la topographie du terrain respectivement à parcourir.

7. Machine d'épandage agricole (10) selon l'une des revendications 1 à 6, le dispositif de commande électronique (50) étant programmé pour calculer l'état de déplacement attendu sur la base d'un modèle mathématique représentant le comportement physique de la machine d'épandage (10) et/ou de la rampe d'épandage (26).

8. Machine d'épandage agricole (10) selon l'une des revendications 1 à 7, l'élément d'amortissement étant un cylindre hydraulique (44, 46).

9. Machine d'épandage agricole (10) selon la revendication 8, le cylindre hydraulique (44, 46) pouvant être commandé simultanément par le dispositif de commande (50) en tant qu'actionneur servant au réglage de la rampe d'épandage (26).

10. Machine d'épandage agricole (10) selon la revendication 8 ou 9, le cylindre hydraulique (44, 46) étant, pour le réglage de la propriété d'amortissement du cylindre hydraulique (44, 46), relié à un accumulateur de pression pneumatique (84, 88, 112, 114) par le biais d'une soupape (82, 86, 108, 110) dont l'ouverture de passage peut être modifiée par le dispositif de commande (50) .
